# EUROPÄISCHE PATENTSCHRIFT

(11) **EP 2 991 825 B1**
(45) Veröffentlichungstag und Bekanntmachung des Hinweises auf die Patenterteilung: **06.09.2023**
(21) Anmeldenummer: 14722636.9
(22) Anmeldetag: 02.05.2014
(51) Int. Cl.: B32B 7/12, B27D 5/00, B32B 21/00, B32B 21/04, B32B 21/08, B32B 27/08, B32B 3/02, B29C 63/00, B32B 1/04, B32B 7/14

(54) **BESCHICHTUNGSMATERIAL SOWIE BESCHICHTUNGSVERFAHREN**
EDGE-BAND
BORDURE DE PROTECTION

(30) Priorität: 03.05.2013 DE 102013208122
(43) Veröffentlichungstag der Anmeldung: 09.03.2016
(73) Patentinhaber: HOMAG GmbH, 72296 Schopfloch (DE)
(72) Erfinder: SCHMID, Johannes, 72181 Starzach - Wachendorf (DE); COMPERA, Christian, 69250 Schönau (DE)
(74) Vertreter: Hoffmann Eitle
(86) Internationale Anmeldenummer: PCT/EP2014/058984
(87) Internationale Veröffentlichungsnummer: WO 2014/177688

(56) Entgegenhaltungen:
- DE-A1- 19 955 575
- DE-A1-102010 008 821
- DE-A1-102012 202 503
- US-A1- 2013 133 532

## Beschreibung

### Technisches Gebiet

Die vorliegende Erfindung betrifft ein Beschichtungsverfahren. Die hier betroffenen Werkstücke sind aus Holz oder Holzwerkstoffen, wie Spanplatten. Ein solches Verfahren kann sowohl im Durchlauf (bewegtes Werkstück) als auch im Bereich der Stationärtechnik (fixiertes Werkstück) zum Einsatz kommen.

### Stand der Technik

Im Stand der Technik ist ein Beschichtungsmaterial bekannt, welches eine Trägerschicht und eine Haftschicht umfasst. Die Trägerschicht weist nach Anbringung des Beschichtungsmaterials vom Werkstück weg, und kann somit auch als Dekorschicht bezeichnet werden. Die Haftschicht wiederum sorgt für eine Verbindung zwischen Trägerschicht und Werkstück.

Es ist bekannt, die Haftschicht des Beschichtungsmaterials mit einem Laserstrahl zu aktivieren. Dabei wird die Haftschicht an- oder aufgeschmolzen und entfaltet eine adhäsive Wirkung, sodass das Beschichtungsmaterial mittels Druck an einem Werkstück angebracht werden kann und beim Erstarren der Haftschicht eine Verbindung mit dem Werkstück hergestellt wird.

Falls allerdings als Trägerschicht beispielsweise PVC verwendet wird, so kann bei einem Durchdringen der Haftschicht mit dem Laserstrahl durch eine Anregung der Trägerschicht Chlor freigesetzt werden, was im Extremfall in Kombination mit Feuchtigkeit zur Bildung von Salzsäure führt.

An dieser Stelle besteht somit ein Sicherheitsproblem für den Maschinenbediener.

Selbst wenn nicht der zuvor beschriebene sicherheitskritische Fall eintritt, so ist es doch bei hohen Arbeitsgeschwindigkeiten schwierig, eine effektive Qualitätsüberwachung zu gewährleisten, im Rahmen derer festgestellt werden könnte, ob der richtige Abschnitt und die richtige Menge der Haftschicht in einen aktivierten Zustand überführt wurde, oder ob die Energie des Laserstrahls statt die Haftschicht zu aktivieren teilweise in die Trägerschicht eindringt. Ggf. kann erst nach einer Beschichtung eines Werkstücks im Zuge einer nachrangigen Qualitätsprüfung festgestellt werden, ob das Beschichtungsmaterial wie gewünscht am Werkstück aufgebracht wurde oder nicht. Bis ein Fehler festgestellt wird, wird allerdings mit dem falsch eingestellten, beispielsweise falsch fokussierten Laserstrahl Ausschuss produziert.

Selbst eine nachgelagerte Qualitätsüberwachung kann nicht vollständig ausschließen, dass von außen nicht sichtbare Qualitätsmängel vorherrschen, die ggf. zur späteren Ablösung des Beschichtungsmaterials vom Werkstück führen.

Als Stand der Technik ist die DE 199 55 575 A1 bekannt, die ein Verfahren und eine Vorrichtung zum Anhaften eines Deckmaterial an Werkstückoberflächen beschreibt.

Ferner ist die US 2013/0133532 A1 bekannt, die ein System zum Bedrucken, Aktivieren und Aufbringen eines Stroms an aktivierbaren Etiketten beschreibt. Ein aktivierbares Haftmittel ist derart ausgebildet, dass es Energie von einer Bestrahlungsquelle aufnimmt.

Im Dokument WO 00/50221 A1 wird ein Durchlaufverfahren beschrieben, mit dem poröse Schmalseiten von Werkstücken (1) aus Holz oder Holzaustauschwerkstoffen oder holzähnlichen Werkstoffen, wie beispielsweise eine Platte, insbesondere Spanplatte, in einem Durchlauf vergütet, mit einem separaten Beschichtungsmaterial beschichtet und hiermit verklebt werden. Bei diesem Durchlaufverfahren wird auf die Schmalseite des sich kontinuierlich bewegenden Werkstücks eine kombinierte Füll- und Verklebungsmasse aufgetragen. Auf die aufgetragene und noch klebefähige Füll- und Verklebungsmasse wird das separate Beschichtungsmaterial aufgebracht. Hiernach wird das Beschichtungsmaterial an die Profilform der Werstückschmalseite angepasst, angedrückt und mittels der Füll- und Verklebungsmasse verklebt. Die Erfindung betrifft auch eine Durchlaufmaschine zur Durchführung des genannten Verfahrens.

In der Veröffentlichung DE 10 2010 008 821 A1 wird ein Verfahren zum Beschichten von Bauteilen beschrieben. Das Verfahren umfasst die Schritte: Bereitstellen von einem Werkstück mit wenigstens einer Werkstückschmalfläche, bei dem die Werkstückschmalfläche durch Aufbringen mindestens einer ersten aushärtbaren Flüssigkeit auf die Werkstückschmalfläche und zumindest teilweises Aushärten der ersten Flüssigkeit veredelt ist, Erwärmen des Werkstücks wenigstens an der Werkstückschmalfläche und/oder einer Kante, die auf die Werkstückschmalfläche aufgebracht werden soll, und Aufbringen der Kante auf die flüssigkeitsbeschichtete Werkstückschmalfläche und Andrücken der Kante an die flüssigkeitsbeschichtete Werkstückschmalfläche.

### Gegenstand der Erfindung

Demnach ist Aufgabe der vorliegenden Erfindung, ein Beschichtungsverfahren bereitzustellen, mit dem zumindest eines der zuvor genannten Probleme gelöst wird, und somit eine Verbesserung der Sicherheit bei der Applikation des Beschichtungsmaterials und/oder eine Steigerung der Qualitätsüberwachung erreicht werden kann.

Kerngedanke der vorliegenden Erfindung ist es, ein Verfahren unter Einsatz eines Beschichtungsmaterials bereitzustellen, das mit einem zusätzlichen Funktionsträger versehen ist. Dieser Funktionsträger soll eine der zuvor genannten Funktionen übernehmen können, nämlich eine Qualitätssicherungsfunktion und/oder eine Gefahrenvermeidungsfunktion bereitstellen.

"Aktivierbar" im Sinne der vorliegenden Anmeldung bedeutet, dass das entsprechende Element, also beispielsweise die Haftschicht, mittels Energieeintrag von einem festen Zustand in einen eher weichen Zustand versetzt werden kann (also beispielsweise an- oder aufgeschmolzen wird), der dieser Schicht eine neue oder zusätzliche Funktion zuweist. Die Haftschicht entfaltet während oder nach der Aktivierung beispielsweise eine adhäsive Wirkung, so dass nach Aufbringen des Beschichtungsmaterials auf ein Werkstück und Erstarren der Haftschicht eine Verbindung zwischen Beschichtungsmaterial und Werkstück bereitgestellt wird.

Erfindungsgemäß wird bei einer energetischen Anregung des Funktionsträgers ein detektierbares Signal ausgegeben, insbesondere ein optisches, physikalisches oder chemisches Signal, und dieses Signal wird durch einen Sensor erfasst. Auf diese Weise können zusätzliche Informationen über das Beschichtungsmaterial mit aktivierter Haftschicht erhalten und ggf. für die Ansteuerung der Maschine verwendet werden.

Wenn ein detektierbares Signal erfasst wurde, gibt eine Steuereinheit eine Warnung aus und/oder das Beschichtungsverfahren wird stoppen. Ferner ist es möglich, dass eine Steuereinheit beim Erfassen des detektierbaren Signals die Einbringung der Energie ändert, insbesondere reduziert. Wird die eingebrachte Energie mittels eines Lasers bereitgestellt, bedeutet dies, dass die Laserleistung reduziert wird.

Zur Aktivierung wird im Rahmen der vorliegenden Erfindung ein Laser vorgesehen.

Erfindungsgemäß wird ein Beschichtungsmaterial zur Anbringung an einer Schmalseite eines Werkstücks bereitgestellt, welches Werkstück beispielsweise aus Holz oder Holzwerkstoffen besteht. Das Beschichtungsmaterial umfasst dabei eine Trägerschicht sowie eine aktivierbare Haftschicht. Ferner zeichnet sich das Beschichtungsmaterial dadurch aus, dass an oder in der Haftschicht zumindest ein Funktionsträger vorgesehen ist, der eine zur Aktivierung der Haftschicht eingebrachte Energie zumindest teilweise absorbieren kann.

Dabei ist es bevorzugt, dass der Funktionsträger als Schicht ausgebildet ist, die zwischen der Trägerschicht und der Haftschicht angeordnet ist, wobei bevorzugt zwischen dem Funktionsträger und der Trägerschicht eine weitere aktivierbare Schicht vorgesehen ist. Gemäß dieser bevorzugten Ausführungsform dient der Funktionsträger beispielsweise als Sicherheitsschicht, und kann ggf. zusätzlich eine Qualitätssicherungsfunktion übernehmen. Dabei wird eine zur Aktivierung der Haftschicht eingebrachte Energie durch den Funktionsträger zumindest teilweise derart absorbiert, dass lediglich ein geringerer Energieanteil zur Trägerschicht weitergeleitet wird.

Alternativ ist es möglich, dass der Funktionsträger zumindest abschnittsweise fadenförmig oder punktförmig in oder an der Haftschicht ausgebildet ist.

Im Rahmen der Erfindung können auch unterschiedliche Funktionsträger an oder in der Haftschicht vorgesehen sein, sodass mit mehreren Funktionsträgern unterschiedliche Aufgaben erfüllt werden. Beispielsweise kann einer der Funktionsträger verhindern, dass übermäßige Energie an die Trägerschicht weitergeleitet wird, während ein anderer Funktionsträger zur Ausgabe eines detektierbaren Signals eingerichtet ist.

### Kurze Beschreibung der Zeichnungen

- Fig. 1: ist eine Querschnittsansicht eines Beschichtungsmaterials gemäß einer Ausführungsform der vorliegenden Erfindung.
- Fig. 2: ist eine Querschnittsansicht eines Beschichtungsmaterials gemäß einer zweiten Ausführungsform der vorliegenden Erfindung.
- Fig. 3a: ist eine Querschnittsansicht eines Beschichtungsmaterials gemäß einer dritten Ausführungsform der vorliegenden Erfindung.
- Fig. 3b: ist eine in Richtung A von Figur 3a betrachte Draufsicht auf das Beschichtungsmaterial gemäß der dritten Ausführungsform.

### Detaillierte Beschreibung der bevorzugten Ausführungsformen

Nachfolgend werden anhand der beigefügten Figuren bevorzugte Ausführungsformen der vorliegenden Erfindung beschrieben. Weitere in diesem Zusammenhang genannten Variationen und Modifikationen können jeweils miteinander kombiniert werden, um neue Ausführungsformen der vorliegenden Erfindung auszubilden.

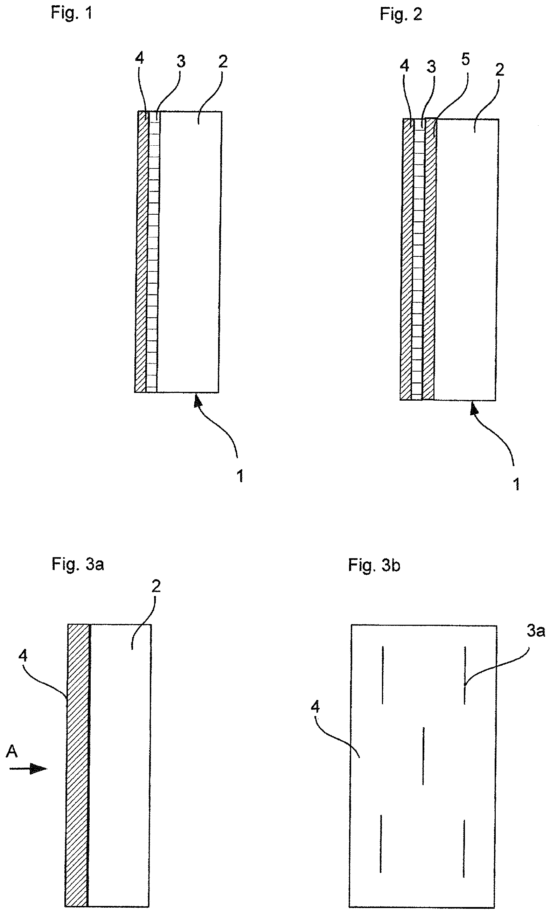

Fig. 1 zeigt eine Querschnittsansicht einer ersten Ausführungsform des erfindungsgemäßen Beschichtungsmaterials 1. Dieses umfasst eine Trägerschicht (Dekorschicht) 2 sowie eine Haftschicht 4. Zwischen der Haftschicht 4 und der Trägerschicht 2 ist ein Funktionsträger 3 in Form einer weiteren Schicht eingefügt.

Die Haftschicht 4 ist mit einem Laser, aktivierbar. In diesem Fall wird der Brennpunkt des Laserstrahls derart eingestellt, dass eine weitgehende Aktivierung über die Breite und Tiefe der Haftschicht 4 ermöglicht wird.

Der Funktionsträger 3 in Form einer Schicht hat in der in Fig. 1 dargestellten Ausführungsform die Aufgabe, die Weiterleitung von Energie ausgehend von der Haftschicht 4 in Richtung der Trägerschicht 2 zu verhindern. Dies betrifft insbesondere den Fall, in dem der Brennpunkt des Laserstrahls derart eingestellt wurde, dass dieser in den Bereich der Haftschicht 2 gelangen würde. Allerdings dient der Funktionsträger 3 in Form einer Schicht auch dazu, die Übertragung von Wärme von der Haftschicht 4 zu Trägerschicht zu vermindern oder weitgehend zu verhindern.

Somit dient der Funktionsträger 3 in der dargestellten Ausführungsform als Schutzschicht gegenüber der Trägerschicht 2, die beispielsweise aus PVC bestehen könnte. Würde eine solche PVC-Schicht durch die Energie des Laserstrahls zu stark angeregt, könnte nicht nur die Trägerschicht 2 angeschmolzen werden. Vielmehr bestünde die Gefahr, dass in Kombination mit Feuchtigkeit Salzsäure entsteht. Der Funktionsträger 3 absorbiert demnach überschüssige Energie und verhindert die Weiterleitung zur Trägerschicht 2.

In der vorliegenden Ausführungsform entspricht die Breite des Funktionsträgers 3 im Wesentlichen der Breite der Haftschicht 4 und der Trägerschicht 2. In einer weiteren Modifikation kann der Funktionsträger jedoch schmaler als diese Schichten ausgebildet und beispielsweise mittig auf der Trägerschicht angeordnet sein. Auch können mehrere Funktionsträger streifenförmig auf der Trägerschicht 2 vorgesehen sein.

In Fig. 2 ist eine weitere Ausführungsform der vorliegenden Erfindung dargestellt, bei der zwischen dem Funktionsträger 3 und der Trägerschicht 2 eine weitere aktivierbare Schicht 5 vorgesehen ist. Diese weitere aktivierbare Schicht 5 wird passiv angeregt, indem ein kleinerer Anteil der in die Haftschicht 4 eingebrachten Energie durch den Funktionsträger 3 gelangt. Dabei ist der Funktionsträger 3 derart ausgelegt, dass ein Durchdringen mit dem Laserstrahl verhindert wird. Die weitere Schicht 5 kann als Ausgleichsschicht dienen, die beim Aufbringen des Beschichtungsmaterials 1 auf ein Werkstück an den Seiten austritt und durch ein entsprechendes Werkzeug abgenommen werden kann.

Als Materialien für den Funktionsträger 3 gemäß den zuvor beschriebenen Ausführungsformen sind insbesondere Metalle, metallische Verbindungen oder kohlenstoffbasierte Elemente wie Karbon oder Karbon-Fasern geeignet. Im Rahmen der Erfindung können jedoch auch vielfältige andere geeignete Materialien zum Einsatz kommen.

In den Figuren 3a und 3b ist eine weitere Ausführungsform der vorliegenden Erfindung dargestellt. Hierbei ist der Funktionsträger 3a nicht wie in Figuren 1 und 2 als Schicht zwischen der Haftschicht und der Trägerschicht 2 ausgebildet, sondern fadenförmig. Der fadenförmige Funktionsträger 3a absorbiert die bei der Aktivierung der Haftschicht 4 eingebrachte Energie, und kann daraufhin ein detektierbares Signal ausgeben, oder kann auch direkt durch den Laserstrahl in diesen Zustand versetzt werden. Das detektierbare Signal kann durch Sensoren erfasst werden, wodurch feststellbar ist, ob die Haftschicht 4 ausreichend oder ggf. übermäßig aktiviert wurde.

In Fig. 3b ist der Funktionsträger 3a abschnittsweise fadenförmig ausgebildet. Allerdings ist ersichtlich, dass ein solcher Funktionsträger auch entlang der Längsrichtung des Beschichtungsmaterials 1 (in Fig. 3b von unten nach oben) durch dieses gelangen kann. Auch ist es möglich, den Funktionsträger punktförmig oder flächenförmig auf oder in die Haftschicht zu integrieren.

Im Rahmen der zuvor beschriebenen Ausführungsformen wurde auf einen oder mehrere Funktionsträger Bezug genommen, die im Wesentlichen gleich ausgebildet sind. Allerdings kann es in einer weiteren Modifikation vorgesehen sein, dass mehrere unterschiedliche Funktionsträger am Beschichtungsmaterial vorgesehen sind. Auf diese Weise können unterschiedliche Aufgaben erfüllt werden. Beispielsweise wird zum einen eine Anregung der Trägerschicht erreicht, und gleichzeitig eine ausreichende Aktivierung der Haftschicht überwacht.

Das detektierbare Signal kann beispielsweise optisch erfasst werden, beispielsweise als eine Luminenzfarbe mittels Schwarzlicht, insbesondere mit Hilfe einer Kamera. Alternativ kann mit einem geeigneten Sensor ein chemischer Stoff, beispielsweise ein Geruch erfasst werden, oder es ist eine physikalische Detektierung denkbar. Gemäß einer weiteren Ausführungsform kann bei der Aktivierung entstehender Dampf mit einer Kamera oder einem chemischen Sensor erfasst werden.

Wird das detektierbare Signal erfasst, so wird auf die Steuerung des Lasers eingewirkt. Beispielsweise kann der Laser zum Schutz von Umwelt und Maschine abgeschaltet werden, wenn zu befürchten ist, dass bei der Laserbeaufschlagung schädliche Dämpfe entstehen.

Alternativ kann es auch vorgesehen sein, die Laserleistung zu ändern, insbesondere zu reduzieren, wenn durch die Erfassung des detektierbaren Signals zu erwarten ist, dass durch den Laserstrahl beispielsweise eine Beschädigung des Beschichtungsmaterials bewirkt wird.

## Patentansprüche

1. Verfahren zum Beschichten eines Werkstücks mit einem Beschichtungsmaterial zur Anbringung an einer Schmalseite des Werkstücks, welches Werkstück (W) aus Holz oder Holzwerkstoffen besteht, mit den Schritten:
Zuführen eines Beschichtungsmaterials (1) zu einem Werkstück, welches Beschichtungsmaterial (1) eine Trägerschicht (2), eine aktivierbare Haftschicht (4) und an oder in der Haftschicht (4) zumindest einen Funktionsträger (3, 3a) umfasst,
Aktivieren der Haftschicht,
wobei der Funktionsträger (3, 3a) die bei der Aktivierung der Haftschicht (4) durch einen Laserstrahl eingebrachte Energie zumindest teilweise absorbiert,
**dadurch gekennzeichnet, dass**
bei einer energetischen Anregung des Funktionsträgers ein detektierbares Signal ausgegeben wird, insbesondere ein optisches, physikalisches oder chemisches Signal, und dieses Signal durch einen Sensor erfasst wird,
bei dem eine Steuereinheit auf Grund des Ergebnisses der Erfassung des detektierbaren Signals die Einbringung der Energie ändert, insbesondere reduziert und/oder die Zuführgeschwindigkeit des Beschichtungsmaterials verändert, oder
bei dem eine Steuereinheit eine Warnung ausgibt und/oder das Beschichtungsverfahren stoppt, wenn ein detektierbares Signal erfasst wurde.

2. Verfahren gemäß Anspruch 1, **dadurch gekennzeichnet, dass** der Funktionsträger (3) als Schicht ausgebildet ist, die zwischen der Trägerschicht (2) und der Haftschicht (4) angeordnet ist, wobei bevorzugt zwischen dem Funktionsträger (3, 3a) und der Trägerschicht (2) eine weitere aktivierbare Schicht (5) vorgesehen ist.

3. Verfahren gemäß einem der vorangegangenen Ansprüche, **dadurch gekennzeichnet, dass** der Funktionsträger (3a) zumindest abschnittsweise fadenförmig oder punktförmig in oder an der Haftschicht (4) ausgebildet ist.

4. Verfahren gemäß einem der vorangegangenen Ansprüche, **dadurch gekennzeichnet, dass** die Trägerschicht (2) PVC umfasst.

5. Verfahren gemäß einem der vorangegangenen Ansprüche, **dadurch gekennzeichnet, dass** mehrere unterschiedliche Funktionsträger (3, 3a) an oder in der Haftschicht (4) vorgesehen sind.

## Claims

1. Method for coating a workpiece with a coating material for application to a narrow side of the workpiece, which workpiece (W) consists of wood or wood materials, comprising the steps of:
supplying a coating material (1) to a workpiece, which coating material (1) comprises a carrier layer (2), an activatable adhesive layer (4) and at least one functional carrier (3, 3a) on or in the adhesive layer (4),
activating the adhesive layer,
wherein the functional carrier (3, 3a) absorbs at least some of the energy introduced by a laser beam during activation of the adhesive layer (4),
**characterised in that**
a detectable signal is emitted during energetic excitation of the functional carrier, in particular an optical, physical or chemical signal, and said signal is detected by means of a sensor,
wherein a control unit changes the energy input, in particular reduces same, and/or changes the supply speed of the coating material based on the result of the detection of the detectable signal, or
wherein a control unit issues a warning and/or the coating method is stopped when a detectable signal has been detected.

2. Method according to claim 1, **characterised in that** the functional carrier (3) is designed as a layer that is arranged between the carrier layer (2) and the adhesive layer (4), wherein a further activatable layer (5) is provided preferably between the functional carrier (3, 3a) and the carrier layer (2).

3. Method according to any of the preceding claims, **characterised in that** the functional carrier (3a) is formed in a filiform or punctiform manner at least in portions in or on the adhesive layer (4).

4. Method according to any of the preceding claims, **characterised in that** the carrier layer (2) comprises PVC.

5. Method according to any of the preceding claims, **characterised in that** multiple different functional carriers (3, 3a) are provided on or in the adhesive layer (4) .

## Revendications

1. Procédé pour le revêtement d'une pièce à usiner avec un matériau de revêtement pour une installation au niveau d'un côté étroit de la pièce à usiner, laquelle pièce à usiner (W) se compose de bois ou de matériaux à base de bois, avec les étapes consistant à :
alimenter une pièce à usiner en un matériau de revêtement (1), lequel matériau de revêtement (1) comprend une couche de support (2), une couche adhésive activable (4) et au moins un support fonctionnel (3, 3a) au niveau de la couche adhésive (4) ou dans celle-ci,
activer la couche adhésive,
dans lequel le support fonctionnel (3, 3a) absorbe au moins partiellement l'énergie apportée par le biais d'un rayon laser lors de l'activation de la couche adhésive (4),
**caractérisé en ce que**
lors d'une excitation énergétique du support fonctionnel un signal détectable est émis, en particulier un signal optique, physique ou chimique et ce signal est acquis par le biais d'un capteur, dans lequel une unité de commande modifie l'apport d'énergie du fait du résultat de l'acquisition du signal détectable, en particulier réduit et/ou modifie la vitesse d'alimentation du matériau de revêtement, ou
dans lequel une unité de commande émet un avertissement et/ou arrête le procédé de revêtement si un signal détectable a été acquis.

2. Procédé selon la revendication 1, **caractérisé en ce que** le support fonctionnel (3) est réalisé en tant que couche qui est disposée entre la couche de support (2) et la couche adhésive (4), dans lequel une autre couche activable (5) est prévue de préférence entre le support fonctionnel (3, 3a) et la couche de support (2).

3. Procédé selon l'une quelconque des revendications précédentes, **caractérisé en ce que** le support fonctionnel (3a) est réalisé au moins par sections en forme de fil ou en forme de point dans la couche adhésive (4) ou au niveau de celle-ci.

4. Procédé selon l'une quelconque des revendications précédentes, **caractérisé en ce que** la couche de support (2) comprend du PVC.

5. Procédé selon l'une quelconque des revendications précédentes, **caractérisé en ce que** plusieurs supports fonctionnels (3, 3a) différents sont prévus au niveau de la couche adhésive (4) ou dans celle-ci.
